# EUROPEAN PATENT SPECIFICATION

(11) **EP 2 438 358 B1**
(45) Date of publication and mention of the grant of the patent: **18.01.2017**
(21) Application number: 10707204.3
(22) Date of filing: 09.03.2010
(51) Int. Cl.: F24D 3/08, F24D 10/00, F24D 11/02

(54) **HEATING SYSTEM**
HEIZSYSTEM
SYSTÈME DE CHAUFFAGE

(30) Priority: 10.03.2009 DK 200900328
(43) Date of publication of application: 11.04.2012
(73) Proprietor: Danfoss A/S, 6430 Nordborg (DK)
(72) Inventor: KRISTJANSSON, Halldor, DK-2200 København N (DK)
(74) Representative: Copsey, Timothy Graham
(86) International application number: PCT/DK2010/000027
(87) International publication number: WO 2010/102626

(56) References cited:
- CH-A- 187 961
- DE-A1- 2 532 850
- DE-U1-202006 010 460
- FR-A1- 2 715 462
- FR-A1- 2 899 671

## Description

The invention relates to a closed loop heating system, comprising at least one closed fluid circuit, at least one thermal energy receiving unit and at least one thermal energy releasing unit. Additionally, the invention relates to a local community heating net and/or to a district heating net.

District heating networks for heating houses and other buildings are well known, in particular in certain countries. In such district heating nets, a thermal energy transfer fluid (usually water and/or water vapour with some additives) is heated at a central location. From there the fluid is distributed via pipes and sometimes through intermediary heat exchangers or mixing loops to a plurality of buildings. In these buildings, the hot fluid is used for general heating purposes. The hot fluid is used for heating the rooms within the building (using a floor heating or heating radiators, for example) as well as for heating up tap water, for example. The centralized heating of the district heating network can provide efficiency gains. In particular, waste heat of industrial applications and/or of electrical power plants can be used for a useful purpose. This way, the use of primary energy can be lowered.

The variety of heating applications in present buildings necessitates a relatively high temperature at the transfer point to the connected building. As an example, it is usually required that tap water is at least around 45°C to 60°C. To be able to heat up the tap water to this temperature level an appropriate surplus temperature is needed. Consequently, the temperature of the thermal transfer fluid at the point of transfer to the connected building should be at a temperature of at least 60°C.

Such a high temperature, however, can result in high heat loss in the pipe net. The higher the temperature is, the more thermal energy is lost on the way from the centralized heating unit to the connected building. Therefore, sophisticated thermal insulation systems have to be provided, which increases the installation costs for the district heating system.

Furthermore, in case of long pipes to remote buildings the temperature in the pipes can drop below a suitable operation temperature. Hence large efforts have to be made to update the long-distance part of the district heating system. The temperature in the pipes can also drop below a suitable operation temperature when they supply buildings with small heat demand.

In US 4,187,982 A a heating system with a plurality of heat storage devices is disclosed, in which thermal energy from a remote heating grid is stored during off-peak hours, while the stored energy is retrieved during peak hours. Although this unit can solve some problems, a high temperature at the transfer point of the remote heating grid is still required.

In US 6,913,076 B1 is used to reuse waste heat which is set free in the industrial applications. Heat is extracted from a waste fluid stream by use of heat pump and transferred to heat exchanger, in which the temperature of an in-bound fluid stream is elevated. Contrary to US 6,913,076 B1, district heating networks require closed fluid circuits, to be efficient.

The citation D1 = US 8,099,972 disclose a closed loop heating system, comprising a closed fluid circuit, a thermal energy receiving unit and a thermal energy releasing unit with an active thermal energy transfer unit 3, transferring thermal energy from a first part of said fluid circuit to a second part of said fluid circuit. However, the closed loop is set up such that the cold side, evaporator is connected to the return line only able to direct fluid in one direction and an inlet fluid from heat exchanger receiving energy from reservoir, where this forward line directing flow only is connected to the evaporator. The hot unit the condenser is inlet through line connected downstream two thermal energy releasing units and thus being a return line.

Therefore, the object of the invention is to provide for a heating system, which can be used efficiently for district heating nets.

It is therefore suggest to design a closed loop heating system, according to claim 1. Although it seems to be awkward to transfer thermal energy from one point to another point in a closed fluid circuit, by doing this, many problems involved with district heating systems can be solved. This way, it is possible to decrease the temperature (advertently or inadvertently) which has to be provided at the transfer point from the long-distance part of the district heating system to the connected building. Despite the lowering of the entry temperature, it is still possible to provide for a high temperature for certain applications, like for providing sufficiently hot tap water. It has to be understood that the applications, needing a high temperature input level (above 40°C, 50°C, 60°C, 70°C or 80°C, for example) are usually consuming only a part of the overall consumed thermal energy. The majority of the consumed thermal energy, however, is usually used for heating rooms. Heating units for heating rooms (like heating radiators and particularly floor heating systems), however, can usually already work efficiently at much lower temperatures. For example, a temperature of the thermal energy transfer fluid at the transfer point of only 40°C, 45°C, 50°C, 55°C, 60°C, 65°C, 70°C of 75°C can prove to be sufficient. This way it is possible to provide a lower temperature at the transfer point. Such a reduced temperature can be present essentially at all times. This way, the extent of the thermal insulation of the district heating net can be reduced. Furthermore, additional consumers can be added to an existing district heating net, even without adapting the existing net in advance. However, it is also possible that the lower temperature is only present from time to time. This way is possible to bridge peak time intervals without any noticeable loss in the quality of the heating service. By the notion "active thermal energy transfer unit" usually a device is meant, which is able to transfer thermal energy against the normal direction of thermal diffusion, at least from time to time. By the notion "thermal energy receiving unit" usually a device is meant which is able to input thermal energy, at least from time to time. This can be a simple heat exchanger. In principle, also a heating unit, like an electrical heater or an oil heater is possible. By the notion "thermal energy releasing unit" usually a device is meant which is able to output thermal energy, at least from time to time. This can be a simple heat exchanger, a heating radiator, a floor heating or the like.

Preferably, the closed loop heating system is designed in a way that at least one thermal energy transfer fluid is provided within said closed fluid circuit, preferably at least one thermal energy transfer fluid, having an elevated specific heat coefficient. This way, it is possible to use the suggested closed loop heating system in connection with already existing district heating systems. Therefore, the acceptance of the suggested system can increase considerably. Furthermore, by using already available thermal energy transfer fluids, the respective thermal energy transfer fluid can be highly available on the market. Using thermal energy transfer fluids, having an elevated specific heat, the heat transfer capacity of the whole system can be very high. In particular, water can be used as a thermal energy transfer fluid. Of course, any additives can be added to the water for performing different technical functions, like the prevention of corrosion or the like. Apart from a high specific heat coefficient, water is highly available and comparatively cost efficient.

The heat pump can be particularly of a design, in which a refrigerant is moved in a closed loop refrigeration circuit, wherein the refrigerant undergoes one or several phase changes. Heat pumps of this design are readily available on the market for a relatively low price. In particular, since only a relatively small amount of thermal energy has to be transferred by the active heat transfer unit, the active heat transfer unit can be comparatively small. For example, an active heat transfer unit with a heat transfer power in the order of ½ kW or 1 kW is usually sufficiently large. Using a standard heat pump design, it is possible that the compressor has to have a power of only 50 W, 60 W, 70 W, 80 W, 90 W or 100 W, for example.

Preferably, at least one of said thermal energy receiving units is designed as a part of the district heating net, in particular as a heat exchanger, connecting on a first side to said district heating net and on a second side to said fluid circuit. This way, thermal energy from a district heating net can be used for the closed loop heating system, while the respective thermal energy transfer fluids do not have to be shared. Hence, it is possible to use optimized thermal energy transfer fluids, including equivalent fluids, which contain different additives. This way, the efficiency of the systems involved can be further increased. Of course, by using the thermal energy of the district heating net, the usual advantages of district heating systems can be achieved.

Another possible design can be achieved, it is at least one of said thermal energy receiving units is designed as an external thermal energy source, in particular as a thermal collector and/or as an external heater. This way, thermal energy can be introduced into the closed loop heating system, without taking said thermal energy from said district heating net. This can be sensible for several reasons. For example, it is possible to bridge a peak demand of the district heating net, in which a thermal energy unit is very expensive. Also, a very cost efficient and/or an environmentally friendly energy source (which might not be available all the time) can be used in addition to the thermal energy, provided by the district heating net. Said external thermal energy source can in principle supply any part of the closed loop heating system. In practical applications, the external thermal energy source will be preferably placed in a part of the closed fluid circuit, where the design parameters of the respective external thermal energy source matches best with the respective part of the closed fluid circuit of the closed loop heating system. This way, an external thermal energy source, generating a high output temperature, will usually be placed in a high temperature part of the fluid circuit (e.g. a hot tap water heating unit). Of course, it is also possible to connect the respective external thermal energy source to varying parts of the closed fluid circuit. This is particularly useful for external thermal energy sources, showing a different output temperature over time (which is true for thermal collectors, for example). This can be achieved by providing switchable valves.

It is further possible to provide a plurality of closed loop heating systems which are fluidly connected, in particular in a way to form a local community heating net. This way it is possible to reduce the number of transfer points for thermal energy in the district heating net. The single units of the closed loop heating systems can be fluidly connected to each other or can be thermally connected to each other (thus separating the fluids from each other). Of course, hybrid forms also possible. By connecting the single units of the local community heating net (thermally or fluidly), it is even possible to transfer heat energy from one unit to another. For example, if only part of the buildings, forming the local community heating net are provided with a thermal collector, it is possible that the thermal energy, collected by these thermal collectors can be used by buildings, lacking thermal collectors. This way it is possible to concentrate the arrangement of thermal collectors to sunny places, thus gaining optimum performance of the local community heating net with reduced investments.

Preferably, the closed loop heating system is arranged in a way that said second part of said fluid circuit is arranged and designed in a way to provide thermal energy for a hot water supply unit. This way, the elevated temperature, provided by the heat pump can be used for this purpose. As already mentioned, providing hot tap water is a service, necessitating a relatively high temperature in the order of 45°C or 60°C (or even higher). Therefore the performance of the heat pump can be used for a service, which requires such an increased temperature.

It is possible that said first part of said fluid circuit is fluidly connected to a forward line of said fluid circuit. By the notion "forward line", in particular thermal energy transfer fluid has to be understood, coming directly from the at least one thermal energy receiving unit, in particular from a thermal energy transfer point between the long-distance part of the district heating system and the closed fluid circuit (for example, a heat exchanger, coupling both parts thermally). This way, the highest temperature that is readily available for the low temperature thermal reservoir of the heat pump is used as an input for the low temperature thermal reservoir. This way, the work, which has to be performed by the heat pump can be reduced to a minimum. This way, the efficiency of the closed loop heating system can be increased. In particular, the consumption of electrical energy can be reduced and the heat pump can be designed smaller.

Furthermore, it is possible to design said closed loop heating system in a way that the return fluid flow of said first part of said fluid circuit is at least partially connected to a return line of said fluid circuit and/or to a thermal consumer, preferably to a room heating system, in particular to a floor heating system. It has to be understood that the temperature of the thermal energy transfer fluid, leaving said first part of the fluid circuit is decreased by an amount, which depends on the workload of the heat pump. Preferably, the return fluid flow is directed according to its temperature to an appropriate device. If the temperature of the thermal transfer fluid is very low, for example, it is best to directly return it to the return line to heat it up again with heat, coming from the district heating net. If the temperature of the return fluid flow is still relatively high (say 25°C, 30°C or 35°C), however, the remaining thermal energy within the thermal transfer fluid can still be used for a purpose, for example for a floor heating. For switching between different modes, switchable valves can be used. Of course, other possibilities exist. For example, the fluid flux of the thermal energy transfer fluid could be increased during high load periods of the heat pump, thus increasing the outflow temperature of the first part of the fluid circuit.

Another possible embodiments of said closed loop heating system can be achieved if at least one of said thermal energy sources, in particular at least one of said thermal collectors is at least partially thermally connected to said second part of said closed loop heating system and/or to a hot water supply unit and/or to a local community heating net and/or to a district heating net. This way, the thermal energy, provided by said thermal energy sources can usually be used particularly effectively. This is, because said thermal energy sources normally have an elevated or even a high output temperature. Such a higher temperature (of above 55°C or 60°C, for example) can usually be directly used for thermal consumers needing a higher input temperature, like a water heater for providing hot tap water. By using (at least in part) the thermal energy, provided by said thermal energy sources, less thermal energy has to be moved by said heat pump.

This way, energy can be saved, like electrical energy for driving a heat pump unit. However, it is also possible to use the thermal energy, provided by said thermal energy sources, for distributing thermal energy over a district heating net and/or over a local community heating net. This way, it is possible to heat up one building, using thermal energy that is generated in another building. This is particular useful for thermal collectors, for example, because usually some people like to have thermal collectors and some don't this could be because thermal collectors are effective in certain locations and efficient in some or some other reason that could for example could be aesthetics of the building. By distributing thermal energy over the network, the best suited locations can be chosen for the thermal collectors, thus lowering the investment and/or increasing the effectiveness of the network.

Furthermore it is suggested to design and arrange said closed loop heating system in a way that it can be operated at a reduced temperature level, in particular at the forward line and/or the return line. As already mentioned, by doing this, energy losses can be decreased on the long-distance part of the district heating net and/or the number of connected buildings can be increased, even without expanding the district heating net. In particular, it is possible to choose the temperature at the forward line to be as low as 35°C, 40°C, 45°C or 50°C.

Furthermore, it is suggested to design a local community heating net and/or a district heating net in a way that at least one closed loop heating system according to the previous description is provided.

The present invention and its advantages will become more apparent, when looking at the following description of possible embodiments of the invention, which will be described with reference to the accompanying figures, which are showing:
- Fig. 1:: a first embodiment of part of a heating system in a schematic view;
- Fig. 2:: a second embodiment of part of a heating system in a schematic view;
- Fig. 3:: a third embodiment of part of a heating system in a schematic view;
- Fig. 4:: a possible embodiment of a heat pump in a schematic view.
- Fig. 5:: a mixing loop
- Fig. 6:: a direct connection

For simplifying the further discussion, in all figures temperature values are included in the drawings. The values given are only examples of possible temperatures and/or temperature ranges, and are not intended to limit the invention in any way.

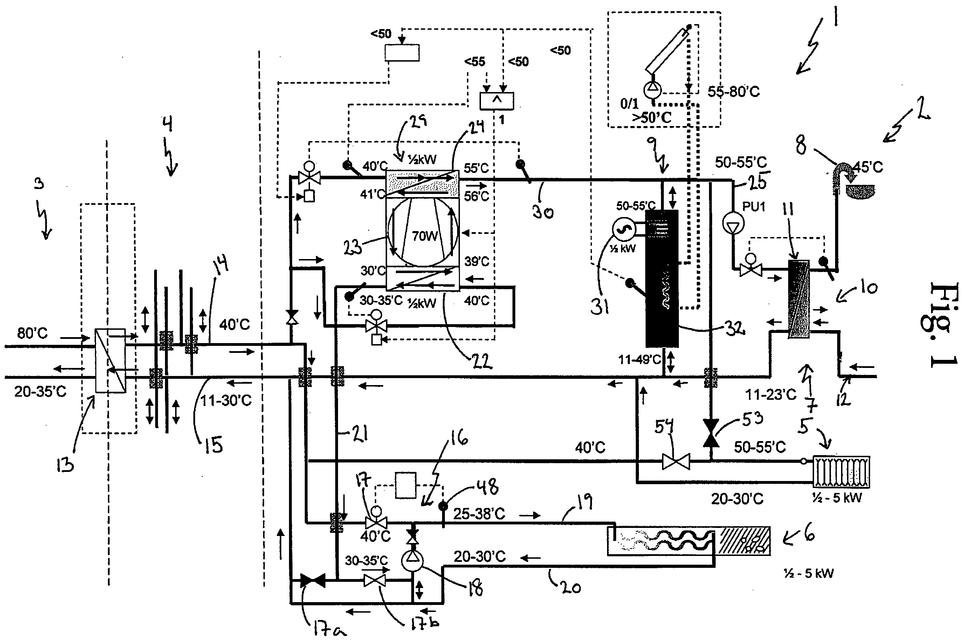

In Fig. 1, a first possible embodiment of a heating system 1, using thermal energy of a district heating net 3, is depicted. By heating system is to be understood the whole system this includes the whole system including the heating plant and any substations and buildings connected to the system. For simplicity the figures only shows part of the system. The heating system 1 is depicted schematically.

The heating system 1 supplies the building 2 with thermal energy in several ways:
Firstly, the heating system 1 supplies heat for heating the rooms within the building 2. For doing this, two different heating systems are provided in the example, shown in Fig. 1. Firstly, heating radiators 5 (wherein in Fig. 1 only one heating radiator 5 is shown) are supplied with thermal energy. Secondly, a floor heating system 6 is also served by the heating system 1. Both heating radiators 5 and a floor heating system 6 can be arranged in a single room. Usually, however, certain rooms will be provided with heating radiators 5, while other rooms will be provided with a floor heating system 6.
Secondly, the heating system 1 provides thermal energy for a hot water supply system 7. The hot water supply system 7 is used for providing hot tap water 8, which is used for different purposes, like for showering, bathing, hand washing, dishwashers, washing machines or the like. In the embodiment shown, the hot water supply system 7 comprises a heat storage unit 9 and a fresh water part 10. The two parts 9, 10 are thermally coupled by means of a heat exchanger 11. While this type of design shows some thermal losses due to the heat exchanger 11 involved, it has considerable hygienic advantages. This is particularly important, if the hot tap water will be used for showering, drinking, tooth brushing or the like. Due to the separate fresh water part 10, cold tap water 12 will be heated up in the heat exchanger 11 and will be dispensed immediately afterwards through a water tap 8, for example.

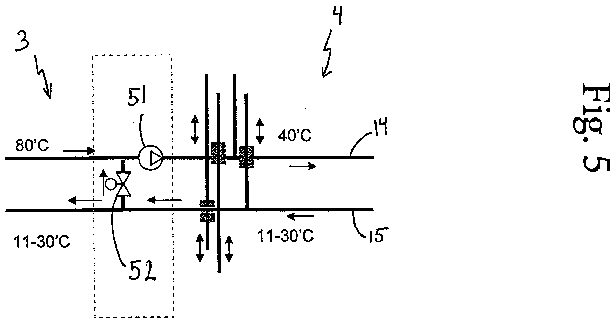

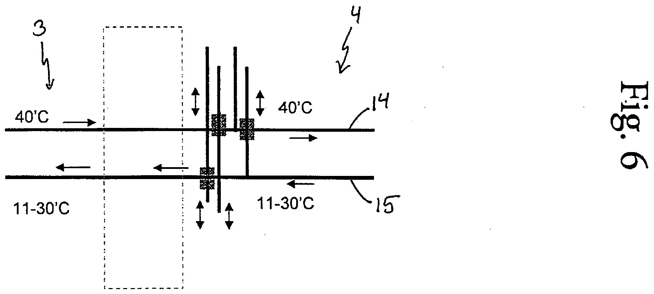

As can be seen in Fig. 1, the heating system 1 of the building 2 is neither directly nor individually coupled to the district heating net 3. Instead, the district heating net 3 is thermally coupled to a local heating network 4 via a transfer point heat exchanger 13 it could also be coupled via a mixing loop as shown in figure 5 or simply directly connected to the district heating net as shown in figure 6. In the local heating net 4, several buildings 2, each comprising a heating system 1, are interconnected to form a small local heating net 4, serving a cluster of buildings 2, like a neighbourhood, a street or the like with thermal energy. In the local heating net 4, the several heating systems 1 can be either connected directly (allowing a fluid exchange, as depicted in Fig. 1), or can be connected only thermally through heat exchangers.

As can be further seen from Fig.1, the district heating net 3 has a forward line temperature of 80°C for the supply of the transfer point heat exchanger 13. The return line temperature of the district heating net 3 is usually within a temperature interval of 20°C to 35°C. The fairly low return temperature is a result of the invention. Today the forward line temperature is around 60-110°C and the return is normally around 30-50°C.

By means of the local heating net 4, a relatively large number of buildings 2 are connected to the district heating net 3. In the example shown in Fig. 1, the number of buildings 2 exceeds the usually allowable number of buildings 2 for the present design of the district heating net 3 and/or the transfer point heat exchanger 13. This situation can easily occur in developing housing areas and/or when the thermal load is particularly high (which can occur, for example, in the morning hours, when the buildings 2 have to be heated up from night temperature to day temperature).

Even in case of a high thermal load of the local heating net 4, the temperature within the local heating network 4 can be maintained low. In the example shown, the temperature of the heating fluid, leaving transfer point heat exchanger 13 through forward line 14 is at a level of only 40°C. The temperature of the heating fluid, flowing back to the transfer point heat exchanger 13 through the return line 15 of the heating system 1 is at a temperature range of some 10°C to some 30°C.

Due to the rather low temperature in forward line 14, not all heating services 5, 8 can be provided anymore by the heating fluid, coming directly out of the forward line 14. In the presently depicted example, a floor heating system 6 can still be directly operated with heating fluid, coming from forward line 14 at a temperature of 40°C. On the contrary, with floor heating systems 6, even a temperature of 40°C can prove to be too high. Therefore, a fluid mixing loop 16 is provided for conditioning the heating fluid, going via pipe 19 to the floor heating system 6. The fluid mixing loop 16 as such is well known in the state of the art. In principle, several valves 17, 17a, 17b, a temperature sensor 48 and a pump 18 are provided, to mix warmer and colder heating fluid in a way that the temperature of the heating fluid, entering the floor heating system 6 through feed line 19 has an acceptable temperature level. However, in the example of Fig. 1, not only heating fluid, coming back from the floor heating system 6 through return line 20 (therefore being at a lower temperature) is mixed with hot heating fluid coming from transfer point heat exchanger 13, but also heating fluid, coming from an interconnecting line 21 is used for mixing. The temperature in the interconnection line 21 is normally between the (somewhat higher) temperature in the local heating net forward line 14, and the (somewhat lower) return temperature from the floor heating. The placement of the joint of the interconnection line 21 with the mixing loop secures, that the medium temperature water from the interconnection line 21 has higher priority than the water from return line 20. Thus water flow from local net forward line 14 is saved, and temperature of return line 15 is lowered. The interconnecting line 21 is connected to the low-temperature part 22 of heat pump 23. This will be described in more detail later.

Other services of the heating system 1, however, have to be supplied at a higher temperature level. Such services can be, for example, standard heat radiators 5 and/or a hot water supply system 7 for the supply of hot tap water 8.

The temperature level varies and especially on cold weather there is a demand for higher temperature to radiators where in relatively warm weather the temperature in the radiators can be as low as 40°C. To be effective, such systems usually need a feed line 25 temperature level of at least some 50°C to 55°C (or higher). Otherwise, the hot tap water, coming out of a water tap 8 would be too cold, for example.

This is actually the reason, why district heating systems according to state of the art do require a supply temperature level of some 60°C or higher. Another reason for the high temperature is that high temperatures reduce biological pollution problems like bacteria this could for example be legionella.

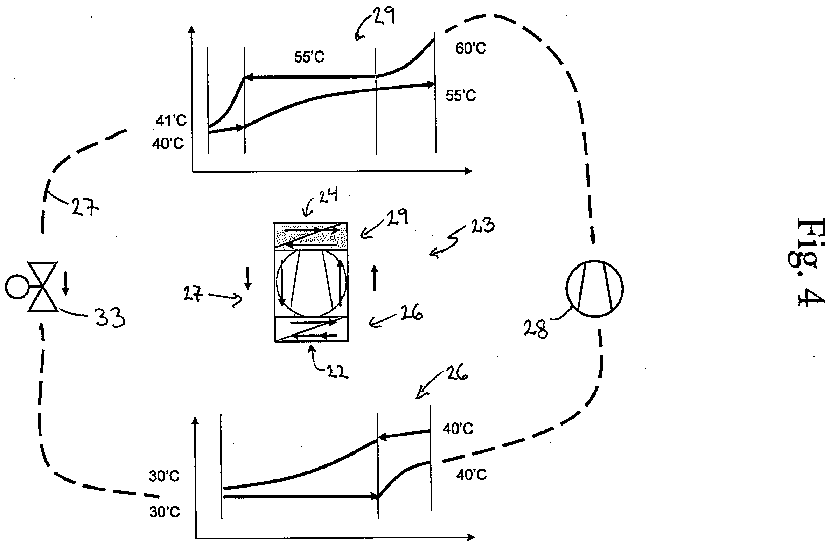

However, in the presently shown heating system 1, the low-temperature at the forward line 14 (coming directly from transfer point heat exchanger 13) is not problematic anymore. This is because of the heat pump 23, provided in the heating system 1. The heat pump 23 comprises and connects a low-temperature part 22 and a high-temperature part 24 (see also figure 4). The low-temperature part 22 of the heat pump 23 is supplied with thermal energy, coming from the transfer point heat exchanger 13. The thermal energy of the heating fluid is transferred to an evaporator part 26 of the refrigerant circuit 27 of the heat pump 23 (compare with figure 4). In the evaporator part 26 of the heat pump 23, heat is absorbed by the evaporating refrigerant. The refrigerant is compressed by the compressor 28 and transferred to a condenser part 29 of the refrigerant circuit 27. In the condenser part 29 of the heat pump 23, heat is transferred through a heat exchanger to another fraction of the heating fluid, coming from the transfer point heat exchanger 13 through forward line 14. There, the relatively low temperature of 40°C is raised to a usable temperature level of around 50° to 55°C. This constitutes the high-temperature part 24 of the heat pump 23.

From the high-temperature part 24 of the heat pump 23, the refrigerant is led through a throttle valve 33 back to the evaporator part 26. The pressure decreases in throttle valve 33, causes the temperature of the refrigerant to drop, so that the refrigerant can absorb thermal energy from the heating fluid, flowing through the low-temperature part 22. Since the temperature of the heating fluid, exiting the low-temperature part 23 through interconnecting line 21 is lowered by the work of the heat pump 23, the heating fluid can be used in the fluid mixing loop 16 of the floor heating system 6. If, however, the temperature of the heating fluid is not suitable for use in the mixing loop, the heating fluid can be directly in full or partially returned to the return line 15 leading to the transfer point heat exchanger 13 by opening valve 17a and closing valve 17b.

The heating fluid exiting the high-temperature part 24 of the heat pump 23 through a fluid line 30 can be used for heating up a heat storage tank 32 of a heat storage unit 9 and/or for supplying thermal consumers like a hot water supply system 7 or heating radiators 5. For improving the service quality of the heating system 1 even further, it is possible to provide for additional heaters 31. In the example shown, an additional heater 31 is arranged within the heat storage tank 32 of the heat storage unit 9.

The radiators 5 can also be supplied from the forward line 14 this is controlled by the valves 53 and 54. Some radiators can operate with 40'C for most of the year. Only when the heat demand is high during winter it is necessary to supply higher temperature fluid to the radiators 14.

Is to be noted that the main thermal consumer of the heating system 1 is the floor heating unit 6. Services, which need a high input temperature (like the hot water supply system 7), on the other hand, are usually using an small part of the overall thermal load. This is because they are usually used only from time to time. Therefore, the heat pump 23 can usually be designed with the relatively low heat transfer capability. In the example, shown in Fig. 1, the electrical power of the heat pump 23 is around 70 W. This transfers into a heat transfer capability of around 0.5 kW. As can be seen by the numbers, a thermal pump 23 of the size of a standard compressor for refrigerators can be used for this. In case the power of the heat pump 23 is exceeded, the additional heater 31 can come up for the missing heating power, for example.

It should be mentioned that supplying heat radiators 5 with the high-temperature heating fluid, heated by means of a heat pump 23 is energetically inferior to supplying a floor heating system 6 with lower temperature heating fluid. Sometimes, however, heating radiators 5 might not be avoidable. When refurbishing a house, for example, it might not be possible to install a floor heating system 6 in all rooms of the existing building.

Of course, the described heating system 1 can also be advantageously employed, when the forward temperature of the local net 14 is so high that it is not needed to operate the heat pump. In this case, the heat pump 23 can be switched off, so that the heating fluid, coming from transfer point heat exchanger 13 through forward line 14 is in some sense thermally connected directly to the heat storage unit 9 and/or the heating radiators 5. The heating system 1 described herein could be used as a fallback position, for example when the district heating system or local heating system is operated with low temperature due to expensive peak load fuel such as oil or gas.

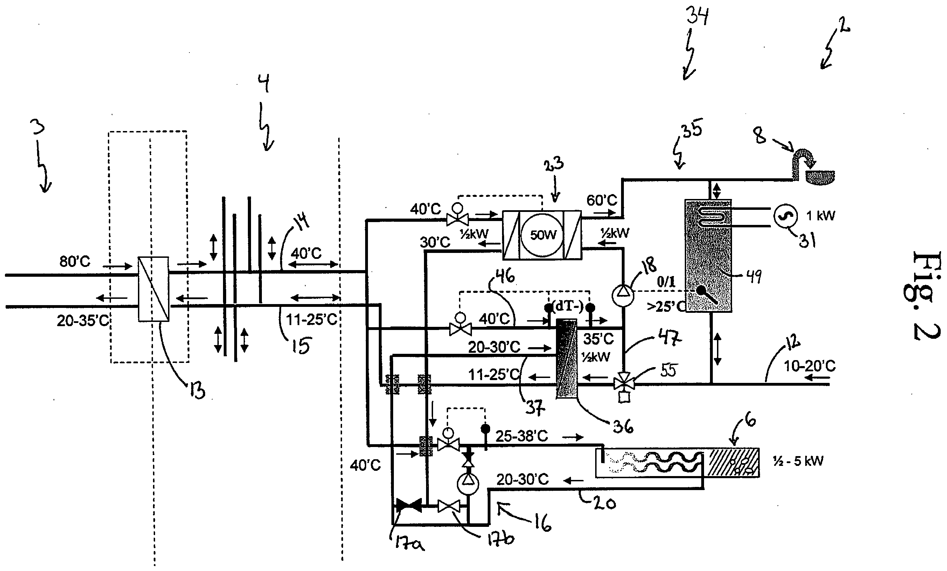

In Fig. 2, another example of the heating system 34 of the building 2 is shown. The heating system 34 is essentially supplied with thermal energy through a district heating net 3. Similar to the situation shown in Fig. 1, the heating system 34 of the building 2 is fluidly connected to a heating system 34 of other building 2 through a local heating net 4.

The design of the presently shown heating system 34 is quite similar to the heating system 1 of Fig. 1. In the presently shown heating system 34, no heating radiators 5 are provided anymore in the heat storage unit 35. However, it is clear to the person skilled in the art that such heating radiators 5 can easily be connected to the forward line 14.

As compared to the heating system 1 of Fig. 1, the heat storage unit 35 is designed different with focus on a lower return temperature. This is done by providing a pre-heating heat exchanger 36 in the heat storage unit 35. Fresh water, coming from the cold tap water line 12, and having a temperature of around 10°C to 20°C is first led through the pre-heating heat exchanger 36. Here it is heated up to an intermediary level of some 35°C by heating fluid, coming through the forward line 14 from transfer point heat exchanger 13. The heating is performed by the preheating heat exchanger 36, so that the local heating net 4 and the heat storage unit 35 are fluidly decoupled. As can be seen from Fig. 2, even an intermediary temperature line 37 can be provided for the supply of the pre-heating heat exchanger 36. Here, return heating fluid, coming from the return line 20 of the floor heating system 6 and being at a temperature level of around 20°C to 30°C is used for the initial heating of the fresh cold tap water 12.

Of course, if the temperature of the water inside the hot tap water tank 49 is very low (in particular lower than 35°C to 40°C), water can be circulated in the heat storage unit 35 by means of pump 18, to be heated up (at least in part) by preheating heat exchanger 36. At some point, the circulating water will be thermally decoupled from the pre-heating heat exchanger 36 which can be done by closing the forward line 46 of the pre-heating heat exchanger 36 and/or by pass line 47 the pre-heating heat exchanger 36 on the heat storage unit side 35 by switching appropriate three way valve 55. After this, heat pump 23 will be switched on. This will enable the heating system 34 to increase the temperature in the heat storage unit 35 to a temperature level of e.g. 60°, exceeding the temperature of the heating fluid, coming in from the transfer point heat exchanger 13 via forward line 14.

Of course, it is also possible to switch on the heat pump 23, even if the temperature in the heat storage unit 35 is still below the temperature of the heating fluid in forward line 14. This way, the heating system 34 might be a little bit less efficient, but the heat storage unit 35 could heat up faster.

As is indicated in Fig. 2, due to the pre-heating heat exchanger 36, the electricity consumption of the heat pump 23 can be reduced. Furthermore, in Fig. 2 the heat storage unit 35 is fluidly coupled to the tap water part 8. It is obvious to a person skilled in the art, that a tap water part 8, which is fluidly separated from the heat storage unit 35 is possible as well.

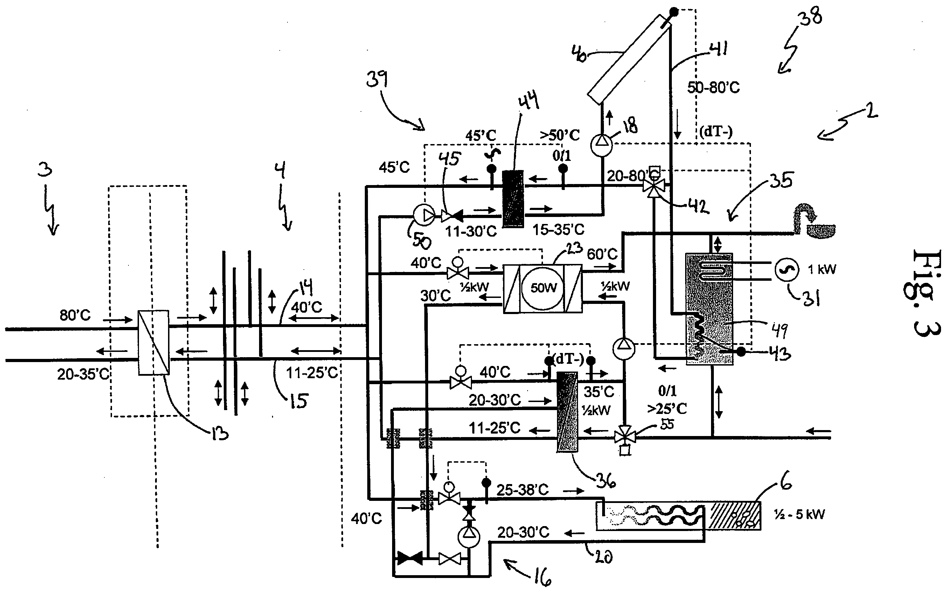

In Fig. 3, another possible modification of the heating system 38 for a building 2 is shown in a schematic way. Once again, the heating system 38 is thermally supplied by a district heating net 3 via a transfer point heat exchanger 13. A plurality of buildings 2, each provided with the heating system 38, are connected to form a local heating network 4. The presently shown heating system 38 resembles the heating system 34, shown in Fig. 2. However, the heating system 38 comprises a solar energy collecting unit 39. The solar energy collecting unit 39 comprises a thermal collector 40, being able to heat up a heating fluid with the aid of incoming solar radiation.

As can be seen in Fig. 3, the thermal collector 40 forms part of a fluid circuit 41 of the solar energy collecting unit 39. The fluid circuit 41 can be switched to different circuit patterns by a three way valve 42. In one of the possible patterns, the heating fluid within fluid circuit 41 is led through a heating spiral 43 of a hot tap water tank 49 of a heat storage unit 35, after being heated by the thermal collector 40. The non-return valve 45 secures that the flow will not reverse when the pump 50 is shut off. Since a working thermal collector 40 has an outflow temperature in the region of typically 50°C to 80°C, the thermal collector 40 can hence be used to heat up the water in the hot tap water tank 49 directly. This way, the heat pump 23 can work at a lower level or can even be switched off, thus saving electrical energy.

In another circuit pattern, the hot tap water tank 49 can be bypassed by the fluid circuit 41. In this state of the fluid circuit 41, thermal energy, generated by the thermal collector 40 (and not used by the heating system 38 of the building 2) can be output to the local heating net 4 via sharing heat exchanger 44. This way, thermal energy collected by thermal collector 40 can be shared with other buildings 2 through the local heating network 4.

Fig. 5 shows way of coupling the local heating net 4 to the district heating net 3. The pump 51 provides that when the valve 52 is open the heating fluid is drawn from the return line 15 and mixed with the feeding line from the heating plant. By regulating the valve 52 it can be secured that the temperature of the feeding line 14 is constant and at a desired temperature.

Fig. 6 shows a way of connecting the local heating net 4 to the district heating net 3. Here the coupling is direct and there are no means for regulating the flow or the temperature.

| | | | |
|---|---|---|---|
| 1. | heating system | 27. | coolant circuit |
| 2. | building | 28. | compressor |
| 3. | district heating net | 29. | condenser |
| 4. | local heating net | 30. | hot fluid line |
| 5. | heating radiator | 31. | additional heater |
| 6. | floor heating system | 32. | heat storage tank |
| 7. | hot water supply system | 33. | throttle valve |
| 8. | tap water | 34. | heating system |
| 9. | heat storage unit | 35. | heat storage unit |
| 10. | fresh water | 36. | preheating heat exchanger |
| 11. | heat exchanger | 37. | Intermediary temperature line |
| 12. | cold tap water | 38. | heating system |
| 13. | transfer point heat exchanger | 39. | solar energy collecting unit |
| | | 40. | thermal collector |
| 14. | forward line | 41. | fluid circuit |
| 15. | return line | 42. | three way valve |
| 16. | fluid mixing loop | 43. | heating spiral |
| 17. | valve | 44. | sharing heat exchanger |
| 17a. | valve | 45. | non return valve |
| 17b. | valve | 46. | forward line |
| 18. | pump | 47. | by-pass line |
| 19. | feeding line | 48. | temperature sensor |
| 20. | return line | 49. | hot tap water tank |
| 21. | interconnecting line | 50. | Pump |
| 22. | low-temperature part | 51. | pump |
| 23. | heat pump | 52. | valve |
| 24. | high-temperature part | 53. | valve |
| 25. | feed line | 54. | valve |
| 26. | evaporator pot | 55. | three way valve |

## Claims

1. Closed loop heating system (1, 34, 38), comprising at least one closed fluid circuit (14, 15) distributing a thermal energy transfer fluid, at least one thermal energy receiving unit (13, 31, 40) where the thermal energy transfer fluid is heated and provided to at least one thermal energy releasing unit (5, 6) through the forward line (14), where a heat pump (23) comprising and connecting a first part (22) and a second part (24) of the closed fluid circuit (14, 15) through a refrigerant circuit (27) that includes an evaporator part (26), a compressor (28) and condenser part (29), where the first part (22) is supplied with thermal energy through the connected forward line (14) from a transfer point heat exchanger (13), **characterized in that**, said heat pump (23) is transferring thermal energy through a heat exchanger from the first part (22) of said least one fluid circuit (14, 15), being the low-temperature part, to the thermal energy transfer fluid coming from the transfer point heat exchanger (13) through forward line (14) at a second part (24) of said least one fluid circuit (14, 15), being the high-temperature part.

2. Closed loop heating system (1, 34, 38) as claimed in claim 1, **characterised in that** at least one thermal energy transfer fluid is provided within said at least one closed fluid circuit (14, 15), preferably at least one thermal energy transfer fluid, having an elevated specific heat coefficient.

3. Closed loop heating system (1, 34, 38) as claimed in any of the preceding claims, **characterised in that** at least one of said thermal energy receiving units (13, 31, 40) is designed as a part of district heating net (3), in particular as a heat exchanger (13), connecting on a first side to said district heating net (3) and on a second side to said at least one fluid circuit (14, 15).

4. Closed loop heating system (1, 34, 38) as claimed in any of the preceding claims, **characterised in that** at least one of said thermal energy receiving units (13, 31, 40) is designed as an external thermal energy source (31, 40), in particular as a thermal collector (40) and/or as an external heater (31).

5. Closed loop heating system (1, 34, 38) as claimed in any of the preceding claims, **characterised in that** said at least one second part (24, 29) of said at least one fluid circuit (14, 15) is arranged and designed in a way to provide thermal energy for a hot water supply unit (8, 9, 10, 11, 12).

6. Closed loop heating system (1, 34, 38) as claimed in any of the preceding claims, **characterized in that** the return fluid flow (15, 21) of said at least one first part (22, 26) of said fluid circuit (14, 15) is at least partially connected to a return line (15) of said fluid circuit (14, 15) and/or to a thermal consumer (5, 6, 8, 11, ), preferably to a room heating system (5, 6), in particular to a floor heating system (6).

7. Close loop heating system (1, 34, 38) as claimed in any of the preceding claims, **characterized in that** the system is designed and arranged to be operated at a reduced temperature level, in particular at the forward line (14) and/or at the return line (15).

## Patentansprüche

1. Heizsystem (1, 34, 38) mit geschlossener Schleife, das wenigstens einen geschlossenen Fluidkreis (14, 15), der ein Wärmeenergieübertragungsfluid verteilt, und wenigstens eine Wärmeenergieempfangseinheit (13, 31, 40) umfasst, wobei das Wärmeenergieübertragungsfluid erwärmt wird und für wenigstens eine Wärmeenergiefreigabeeinheit (5, 6) durch die Vorlaufleitung (14) bereitgestellt wird, wobei eine Wärmepumpe (23), die einen ersten Abschnitt (22) und einen zweiten Abschnitt (24) des geschlossenen Fluidkreises (14, 15) enthält und über einen Kühlmittelkreis (27), der einen Verdampferabschnitt (26), einen Verdichter (28) und einen Kondensatorabschnitt (29) enthält, verbindet, wobei der erste Abschnitt (22) von einem Übertragungspunkt-Wärmetauscher (13) durch die verbundene Vorlaufleitung (14) mit Wärmeenergie versorgt wird, **dadurch gekennzeichnet, dass** die Wärmepumpe (23) Wärmeenergie durch einen Wärmetauscher von dem ersten Abschnitt (22) des wenigstens einen Fluidkreises (14, 15), der ein Niedertemperaturabschnitt ist, zu dem Wärmeenergieübertragungsfluid, das von dem Übertragungspunkt-Wärmetauscher (13) durch die Vorlaufleitung (14) ankommt, an einen zweiten Abschnitt (24) des wenigstens einen Fluidkreises (14, 15), der ein Hochtemperaturabschnitt ist, überträgt.

2. Heizsystem (1, 34, 38) mit geschlossener Schleife nach Anspruch 1, **dadurch gekennzeichnet, dass** wenigstens ein Wärmeenergieübertragungsfluid in dem wenigstens einen geschlossenen Fluidkreis (14, 15) vorgesehen ist, das wenigstens ein Wärmeenergieübertragungsfluid mit einem erhöhten spezifischen Wärmekoeffizienten ist.

3. Heizsystem (1, 34, 38) mit geschlossener Schleife nach einem der vorhergehenden Ansprüche, **dadurch gekennzeichnet, dass** wenigstens eine der Wärmeenergieempfangseinheiten (13, 31, 40) als Teil eines Bezirksheiznetzes (3), insbesondere als ein Wärmetauscher (13), der auf einer ersten Seite mit dem Bezirksheiznetz (3) verbunden ist und auf einer zweiten Seite mit dem wenigstens einen Fluidkreis (14, 15) verbunden ist, entworfen ist.

4. Heizsystem (1, 34, 38) mit geschlossener Schleife nach einem der vorhergehenden Ansprüche, **dadurch gekennzeichnet, dass** wenigstens eine der Wärmeenergieempfangseinheiten (13, 31, 40) als eine externe Wärmeenergiequelle (31, 40), insbesondere als ein Wärmesammler (40) und/oder als eine externe Heizeinrichtung (31) entworfen ist.

5. Heizsystem (1, 34, 38) mit geschlossener Schleife nach einem der vorhergehenden Ansprüche, **dadurch gekennzeichnet, dass** der wenigstens eine zweite Abschnitt (24, 29) des wenigstens einen Fluidkreises (14, 15) in der Weise angeordnet und entworfen ist, dass er Wärmeenergie für eine Warmwasserversorgungseinheit (8, 9, 10, 11, 12) bereitstellt.

6. Heizsystem (1, 34, 38) mit geschlossener Schleife nach einem der vorhergehenden Ansprüche, **dadurch gekennzeichnet, dass** die Rückkehrfluidströmung (15, 21) des wenigstens einen ersten Abschnitts (22, 26) des Fluidkreises (14, 15) wenigstens teilweise mit einer Rücklaufleitung (15) des Fluidkreises (14, 15) und/oder mit einem Wärmeverbraucher (5, 6, 8, 11), vorzugsweise mit einem Raumheizsystem (5, 6), insbesondere mit einem Fußbodenheizungssystem (6), verbunden ist.

7. Heizsystem (1, 34, 38) mit geschlossener Schleife nach einem der vorhergehenden Ansprüche, **dadurch gekennzeichnet, dass** das System so entworfen und angeordnet ist, dass es auf einem abgesenkten Temperaturniveau arbeitet, insbesondere in der Vorlaufleitung (14) und/oder in der Rücklaufleitung (15).

## Revendications

1. Système de chauffage en boucle fermée (1, 34, 38), comprenant au moins un circuit fermé de fluide (14, 15) distribuant un fluide de transfert d'énergie thermique, au moins une unité de réception d'énergie thermique (13, 31, 40) où le fluide de transfert d'énergie thermique est chauffé et délivré à au moins une unité de libération d'énergie thermique (5, 6) par le biais de la ligne aller (14), une pompe à chaleur (23) comprenant et reliant une première partie (22) et une deuxième partie (24) du circuit fermé de fluide (14, 15) par le biais d'un circuit de réfrigérant (27) qui comporte une partie d'évaporateur (26), un compresseur (28) et une partie de condenseur (29), la première partie (22) étant alimentée avec de l'énergie thermique par le biais de la ligne aller reliée (14) depuis un échangeur de chaleur à point de transfert (13), **caractérisé en ce que** ladite pompe à chaleur (23) transfère de l'énergie thermique par le biais d'un échangeur de chaleur depuis la première partie (22) dudit au moins un circuit de fluide (14, 15), étant une partie à basse température, jusqu'au fluide de transfert d'énergie thermique provenant de l'échangeur de chaleur à point de transfert (13), par le biais de la ligne aller (14) au niveau d'une deuxième partie (24) dudit au moins un circuit de fluide (14, 15), étant la partie à haute température.

2. Système de chauffage en boucle fermée (1, 34, 38) selon la revendication 1, **caractérisé en ce qu'**au moins un fluide de transfert d'énergie thermique est disposé à l'intérieur dudit au moins un circuit fermé de fluide (14, 15), de préférence au moins un fluide de transfert d'énergie thermique ayant un coefficient de chaleur spécifique élevé.

3. Système de chauffage en boucle fermée (1, 34, 38) selon l'une quelconque des revendications précédentes, **caractérisé en ce qu'**au moins une desdites unités de réception d'énergie thermique (13, 31, 40) est conçue comme une partie d'un réseau de chauffage urbain (3), en particulier comme un échangeur de chaleur (13), relié sur un premier côté audit réseau de chauffage urbain (3) et sur un deuxième côté audit au moins un circuit de fluide (14, 15).

4. Système de chauffage en boucle fermée (1, 34, 38) selon l'une quelconque des revendications précédentes, **caractérisé en ce qu'**au moins une desdites unités de réception d'énergie thermique (13, 31, 40) est conçue comme une source d'énergie thermique externe (31, 40), en particulier comme un collecteur thermique (40) et/ou comme un dispositif de chauffage externe (31).

5. Système de chauffage en boucle fermée (1, 34, 38) selon l'une quelconque des revendications précédentes, **caractérisé en ce que** ladite au moins une deuxième partie (24, 29) dudit au moins un circuit de fluide (14, 15) est agencée et conçue de manière à délivrer de l'énergie thermique pour une unité d'alimentation en eau chaude (8, 9, 10, 11, 12).

6. Système de chauffage en boucle fermée (1, 34, 38) selon l'une quelconque des revendications précédentes, **caractérisé en ce que** la circulation de fluide de retour (15, 21) de ladite au moins une première partie (22, 26) dudit circuit de fluide (14, 15) est au moins partiellement reliée à une ligne de retour (15) dudit circuit de fluide (14, 15) et/ou à un consommateur thermique (5, 6, 8, 11), de préférence à un système de chauffage de locaux (5,6), en particulier à un système de chauffage au sol (6).

7. Système de chauffage en boucle fermée (1, 34, 38) selon l'une quelconque des revendications précédentes, **caractérisé en ce que** le système est conçu et agencé pour fonctionner à un niveau de température réduit, en particulier sur la ligne aller (14) et/ou sur la ligne de retour (15).
